# EUROPEAN PATENT APPLICATION

(11) **EP 3 185 579 A1**
(43) Date of publication of application: **28.06.2017**
(21) Application number: 15834523.1
(22) Date of filing: 21.05.2015
(51) Int. Cl.: H04Q 11/04

(54) **METHOD AND APPARATUS FOR REDUCING LINK SETUP TIME, CENTRAL OFFICE DEVICE AND STORAGE MEDIUM**

(30) Priority: 21.08.2014 CN 201410416196
(71) Applicant: ZTE Corporation, Shenzhen, Guangdong 518057 (CN)
(72) Inventor: WU, Zhou, Shenzhen Guangdong 518057 (CN)
(74) Representative: Studio Torta S.p.A.
(86) International application number: PCT/CN2015/079461
(87) International publication number: WO 2016/026334

(57) **Abstract**

Disclosed is a method for reducing link setup time. The method comprises: when it is determined that historical far-end crosstalk data of a vectored line on an initialized line satisfies a first preset rule, using the historical far-end crosstalk data as first far-end crosstalk data of the vectored line on the initialized line in a current link setup state; and setting up a link according to the first far-end crosstalk data, the initialized line being a line corresponding to current link setup, and the vectored line being a line having crosstalk on the initialized line during current link setup. Also disclosed are an apparatus for reducing link setup time, a central office device and a storage medium.

## Description

### TECHNICAL FIELD

The present disclosure relates to network communication technology, and more particularly, to a method and apparatus for shortening link establishing time, a central office device, and a storage medium.

### BACKGROUND

The second-generation very-high-bit-rate digital subscriber loop (VDSL2) is one of the mainstream technologies of the last-mile copper access technology, which adopts the discrete multi-tone method to modulate data over different subcarriers for transmission, and can use a spectral bandwidth of up to 30 MHz, thereby the VDSL2 technology has the advantages of relatively high transmission rate, relatively far transmission distance and optimum network utilization. However, since the VDSL2 technology uses a relatively high frequency band, the problem of crosstalk among line pairs in the digital subscriber line (DSL), i.e., DSL crosstalk, is prominent, and as compared with the bandwidth of the single-line pair VDSL2 access, the drop of bandwidth of each line pair during multi-line pair VDSL2 access is very obvious, therefore, the DSL crosstalk problem has become a major factor in VDSL2 performance. The DSL crosstalk is divided into a near-end crosstalk (NEXT) and a far-end crosstalk (FEXT). The FEXT means a transmission signal of an interference line pair starts from the interference line pair, is coupled to an interfered line pair, and then continues to propagate along the interfered line pair until it propagates to a "far-end" receiving end of the interfered line pair. The NEXT means a transmission signal of the interference line pair starts from the interference line pair, is coupled to an interfered line pair, and then is conveyed to a "near-end" receiving end of the interfered line pair. For said DSL crosstalk, the FEXT is interference between uplink signals of different line pairs, or interference between downlink signals of different line pairs; while the NEXT is interference between an uplink signal and a downlink signal of different line pairs. The VDSL2 technology employs a frequency division multiplexing (FDM) method, and the transmission signal of the interference line pair has a frequency band different from that used by the received signal of the interfered line pair, so the NEXT can be eliminated or greatly reduced by a filter. However, the FEXT signal from the interference line pair has the same frequency as the normal received signal of the interfered line pair, so the FEXT cannot be eliminated by the filter. Further, since the VDSL technology has a relatively short transmission distance, and uses a relatively high frequency band, the FEXT problem in the VDSL2 technology is more serious than other DSL technologies. Therefore, the FEXT has become a major factor affecting the performance of the VDSL2 technology. For example, the FEXT may cause the following problems of degrading a signal to noise ratio (SNR) of a VDSL system corresponding to the VDSL technology, decreasing a line transmission rate or a bit error rate or even dropping off and so on, and thus seriously affect the stability of the VDSL system and the user experience.

To completely eliminate the impact of the FEXT on the VDSL2 technology, the International Telecommunication Union Telecommunication Standardization Organization Sector (ITU-T) introduced the technical standard for far-end crosstalk cancellation, namely, G993.5 (G.vector) standard. The vectoring technique in the G993.5 standard can targetedly solve the FEXT problem in lines of the VDSL2 technology, and improve the line performance of the multi-line pair VDSL2 technology. However, in the G993.5 standard, the procedures of collecting error samples and estimating the interference among the line pairs are added, the link establishing time for establishing links for the customer premise equipment (CPE) increases. Therefore, there is an urgent need for a solution to reduce the link establishing time for establishing lines for the CPE, while eliminating the influence on the VDSL2 technology by the FEXT.

### SUMMARY

In order to solve the existing technical problems, the embodiments of the present disclosure provide a method and apparatus for shortening link establishing time, a central office device, and a storage medium, which are capable of shortening the link establishing time of establishing link for customer premises equipment, while eliminating an influence of FEXT on the VDSL2 technology.

The technical solutions of the embodiments of the present disclosure are realized as follows:
the embodiments of the present disclosure provide a method for shortening link establishing time, including:
   when determining that historical far-end crosstalk data of a vectored line to an initialization line conforms to a first preset rule, using the historical far-end crosstalk data as first far-end crosstalk data of the vectored line to the initialization line in a current link establishing state; and
   establishing a link according to the first far-end crosstalk data;
   wherein the initialization line is a line corresponding to the current link establishing; and the vectored line is a line that generates crosstalk to the initialization line during the current line establishing.
   In the above solution, before determining that the historical far-end crosstalk data of the vectored line to the initialization line conforms to the first preset rule, the method further includes:
      determining whether the historical far-end crosstalk data is stored in the current link establishing state.

In the above solution, before determining that the historical far-end crosstalk data of the vectored line to the initialization line conforms to the first preset rule, the method further includes:
determining second far-end crosstalk data of the initialization line corresponding to the current link establishing to the vectored line according to a second preset rule; and
correspondingly, the establishing the link according to the first far-end crosstalk data includes:
   establishing a link based on the first far-end crosstalk data and the second remote crosstalk data.

In the above solution, the determining the second far-end crosstalk data of the initialization line corresponding to the current link establishing to the vectored line according to the second preset rule includes:
determining first sub-far-end crosstalk data of the initialization line corresponding to the current link establishing to the vectored line;
re-determining second sub-far-end crosstalk data of the initialization line corresponding to the current link establishing to the vectored line; and
using the first sub-far-end crosstalk data or the second sub-far-end crosstalk data as the second far-end crosstalk data of the initialization line to the vectored line according to the second preset rule;
wherein the vectored line is a line in which far-end crosstalk is eliminated by using a vectoring method.

In the above solution, the determining that the historical far-end crosstalk data of the vectored line to the initialization line conforms to the first preset rule includes:
determining that storage time of the historical far-end crosstalk data of the vectored line to the initialization line is less than or equal to a first preset threshold value; and
determining that a descending range of a signal-to-noise ratio allowed by the historical far-end crosstalk data of the vectored line to the initialization line is less than or equal to a second preset threshold value.

In the above solution, the method of determining the historical far-end crosstalk data includes:
acquiring far-end crosstalk factor information of the vectored line to the initialization line, and estimating third far-end crosstalk data of the vectored line to the initialization line according to the far-end crosstalk factor information; the third far-end crosstalk data being the historical far-end crosstalk data.

The embodiments of the present disclosure also provide an apparatus for shortening link establishing time, including:
a first determination unit configured to, when determining that historical far-end crosstalk data of a vectored line to an initialization line conforms to a first preset rule, use the historical far-end crosstalk data as first far-end crosstalk data of the vectored line to the initialization line in a current link establishing state; and
a second determination unit configured to establish a link according to the first far-end crosstalk data;
wherein the initialization line is a line corresponding to the current link establishing; and the vectored line is a line that generates crosstalk to the initialization line during the current line establishing.

In the above solution, the apparatus further includes:
a third determination unit configured to, before determining that the historical far-end crosstalk data of the vectored line to the initialization line conforms to the first preset rule, determine whether the historical far-end crosstalk data is stored in the current link establishing state.

In the above solution, the apparatus further includes:
a fourth determination unit configured to determine second far-end crosstalk data of the initialization line corresponding to the current link establishing to the vectored line according to a second preset rule,
correspondingly,
the second determination unit is further configured to establish a link based on the first far-end crosstalk data and the second far-end crosstalk data.

In the above solution, the fourth determination unit includes:
a first determination subunit configured to determine first sub-far-end crosstalk data of the initialization line corresponding to the current link establishing to the vectored line;
a second determination subunit configured to re-determine second sub-far-end crosstalk data of the initialization line corresponding to the current link establishing to the vectored line; and
a third determination subunit configured to use the first sub-far-end crosstalk data or the second sub-far-end crosstalk data as the second far-end crosstalk data of the initialization line to the vectored line according to the second preset rule;
wherein the vectored line is a line in which far-end crosstalk is eliminated by using a vectoring method.

In the above solution, the first determining unit is further configured to, when determining that storage time of the historical far-end crosstalk data of the vectored line to the initialization line is less than or equal to a first preset threshold value; and determining that a descending range of a signal-to-noise ratio allowed by the historical far-end crosstalk data of the vectored line to the initialization line is less than or equal to a second preset threshold value, use the historical far-end crosstalk data as the first far-end crosstalk data of the vectored line to the initialization line in the current link establishing state.

In the above solution, the apparatus further includes:
an acquisition unit configured to acquire far-end crosstalk factor information of the vectored line to the initialization line; and
a fifth determination unit configured to estimate third far-end crosstalk data of the vectored line to the initialization line according to the far-end crosstalk factor information; the third far-end crosstalk data being the historical far-end crosstalk data.

The embodiments of the present disclosure also provide a central office device, including any apparatus for shortening link establishing time mentioned above.

In the method and apparatus for reducing link establishing time, the central office device, and the storage medium, when the historical far-end crosstalk data conforms to the first preset condition, the historical far-end crosstalk data is directly used as the first far-end crosstalk data of the vectored line to the initialization line in the current link establishing state. In this way, during adopting the G993.5 standard, the estimation process of the first far-end crosstalk data of the vectored line to the initialization line can be simplified, and thus the link establishing time is shortened. Therefore, by adopting the embodiments of the present disclosure, the influence of FEXT to the VDSL2 technology can be eliminated, and at the same time, the link establishing time of establishing link for the customer premise equipment can be reduced, and the user experience is improved.

### BRIEF DESCRIPTION OF THE DRAWINGS

Fig. 1 is a flow chart of establishing a link by VSDL2 specified in the G993.5 standard;
Fig. 2 is a flow chart of a method for shortening link establishing time according to an embodiment of the present disclosure;
Fig. 3 is a schematic structural diagram of an apparatus for shortening link establishing time according to the embodiment of the present disclosure;
Fig. 4 is a schematic structural diagram of a fourth determination unit according to the embodiment of the present disclosure; and
Fig. 5 is a flow chart of a specific implementation of the method for shortening link establishing time according to the embodiment of the present disclosure.

### DETAILED DESCRIPTION

To comprehend the features and technical contents of the embodiments of the present disclosure in detail, the implementation of the embodiments of the present disclosure will be described in detail with reference to the accompanying drawings, which are given for reference only and are not intended to limit the embodiments of the present disclosure.

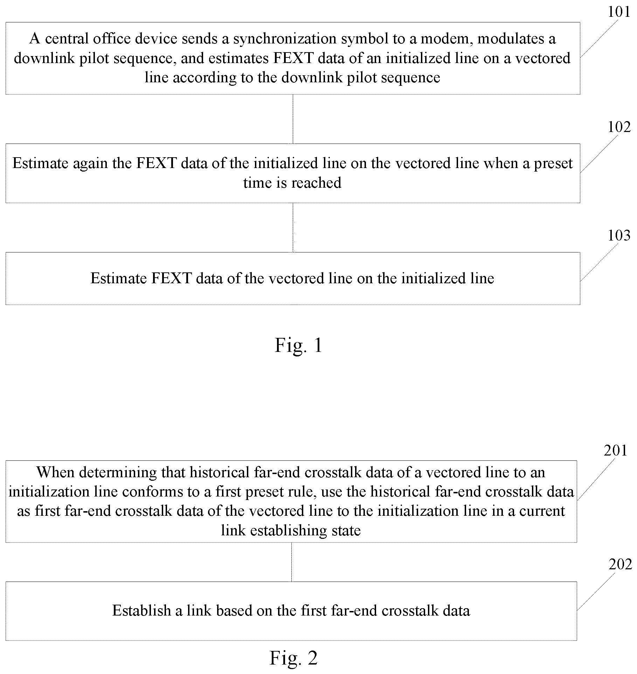

The crosstalk to one VDSL line is a collection of the crosstalk from all the other lines in the whole bundle of cables in addition to its own, which is vector information. The processing system in the Vectoring technology of the G993.5 standard can perform a matrix operation based on these collected vector information, so as to determine a vectoring crosstalk cancellation signal. Therefore, the VDSL2 system is enabled to always operate in a crosstalk-free optimal state according to the crosstalk cancellation signal. Specifically, according to the G993.5 standard, steps of the acquisition of error samples and the estimation of crosstalk among the line pairs are added in the normal VDSL link establishing procedure, i.e., the VDSL link establishing procedure specified in the G993.2 standard. As shown in Fig. 1, the steps include the following steps.

In step 101, a central office device sends a synchronization symbol to a modem, modulates a downlink pilot sequence, and estimates FEXT data of an initialization line to a vectored line according to the downlink pilot sequence.

The initialization line is a line corresponding to the current link establishing.

In step 102, after reaching a preset time, FEXT data of the initialization line to the vectored line is re-estimated.

In step 103, FEXT data of the vectored line to the initialization line is estimated.

Here, the crosstalk cancellation signal may be determined from the FEXT data of the initialization line to the vectored line and the FEXT data of the vectored line to the initialization line. In the step (2), the FEXT data of the initialization line to the vectored line is re-estimated in order to verify the accuracy of the FEXT data determined in the step (1). When the FEXT data determined in the step (2) is the same as the FEXT data determined in the step (1), the FEXT data is used as the crosstalk data of the initialization line to the vectored line; and when the FEXT data determined in the step (2) is different from the FEXT data determined in the step (1), the existing FEXT data of the initialization line to the vectored line may be overwritten by the FEXT data determined in the step (2), that is, the FEXT data determined in the step (2) is used as the crosstalk data of the initialization line to the vectored line; or, in practical applications, the FEXT data determined in the steps (1) and (2) are processed according to a preset rule, and the crosstalk data of the initialization line to the vectored line is determined based on the processing result.

The addition of the above three steps increases the time for establishing link. Under normal circumstances, the time for establishing link by using the VDSL technology is about 30s, while after introducing the above three steps into the G993.5 standard, the time for establishing link by adopting the VDSL2 technology is about 3 minutes, thus extending the link establishing time of the VDSL2 technology, reducing the performance of the VDSL2 system, thereby decreasing the user experience. Therefore, there is a need for a method which can not only eliminate the impact of the FEXT on the VDSL2 technology, but also reduce the link establishing time for establishing link for the CPE. The embodiments of the present disclosure are solutions for solving these problems, and the embodiments of the present disclosure will be described in more detail with reference to specific embodiments.

### First Embodiment

Fig. 2 is a schematic flow chart of a method for shortening link establishing time according to an embodiment of the present disclosure. As shown in Fig. 2, the method is applied to a vectoring system, and includes the followings steps.

In step 201, when determining that historical far-end crosstalk data of a vectored line to an initialization line conforms to a first preset rule, the historical far-end crosstalk data is used as first far-end crosstalk data of the vectored line to the initialization line in a current link establishing state.

In step 202, a link is established based on the first far-end crosstalk data.

The initialization line is a line corresponding to the current link establishing; and the vectored line is a line that causes crosstalk to the initialization line at the time of the current link establishment.

In the practical application, a customer premise equipment sends a message of requesting link establishment to a central office device through a modem; the central office device establishes the link for the customer premise equipment according to the message of requesting link establishment. First, the central office device distributes an initialization line for the customer premise equipment according to the message of requesting link establishment, the initialization line being a link corresponding to the current link establishing process; secondly, since the initialization line may cause crosstalk to the existing lines, and the existing lines may also cause crosstalk to the initialization line, in order to solve the crosstalk problem of the initialization line, the embodiments of the present disclosure adopt the provisions in the G993.5 standard to determine the final crosstalk cancellation data, and in the present embodiment, the finally determined crosstalk cancellation data is called as crosstalk data; finally, the central office device establishes the link according to the final crosstalk data, and feeds back the link establishment result to the customer premise equipment to complete the link establishment process.

In the present embodiment, the initialization line and the vectored line are lines in the same cable bundle in the current link establishing state. When none of lines in the cable bundle is used, and any line in the cable bundle is used as the initialization line for the first time, historical far-end crosstalk data of the vectored line to the initialization line is not stored in the central office device, so it is necessary to determine the FEXT data of the vectored line to the initialization line according to the G993.5 standard. When some of the lines in the cable bundle, such as line A to line E, eliminate the crosstalk in said line A to line E in accordance with the vectoring technology specified in the G993.5 standard, i.e., the lines A through E in the cable bundle are vectored lines, at this time, the central office device stores with the historical far-end crosstalk data of the determined vectored line to the initialization line. Further, if the historical far-end crosstalk data of the vectored line to the initialization line stored in the central office device coincides with a first preset rule, the historical far-end crosstalk data is used as first far-end crosstalk data of the vectored line to the initialization line in the current link establishing state, then a link is established according to the first far-end crosstalk data, which can simplify the estimation process in the step 103 shown in Fig. 1 and directly use the historical far-end crosstalk data as the first far-end crosstalk data, then it is capable to shorten the link establishing time during adopting the G993.5 standard, i.e., can not only eliminate the effect on the VDL2 technology by the FEXT, but also reduce the link establishing time for establishing link for the customer premise equipment, and improve the user experience.

In the above scheme, before determining that the historical far-end crosstalk data of the vectored line to the initialization line complies with the first preset rule, the method further includes:
determining that the historical far-end crosstalk data is stored in the current link establishing state.

In the above scheme, before determining that the historical far-end crosstalk data of the vectored line to the initialization line complies with the first preset rule, the method further includes:
determining second far-end crosstalk data of the initialization line corresponding to the current link establishment to the vectored line according to a second preset rule.

Correspondingly, the establishment of link according to the first far-end crosstalk data includes:
establishing a link based on the first far-end crosstalk data and the second far-end crosstalk data.

In the above scheme, the determining the second far-end crosstalk data of the initialization line corresponding to the current link establishment to the vectored line according to the second preset rule includes:
determining first sub-far-end crosstalk data of the initialization line corresponding to the current link establishment to the vectored line;
determining second sub-far-end crosstalk data of the initialization line corresponding to the current link establishment to the vectored line again; and
using the first sub-far-end crosstalk data or the second sub-far-end crosstalk data as the second far-end crosstalk data of the initialization line to the vectored line according to the second preset rule.

The vectored line is a line that uses a vectoring method to eliminate the far-end crosstalk.

In a practical application, the central office device cannot determine the final crosstalk data only based on the first far-end crosstalk data, since in the process of line crosstalk, there are both the crosstalk generated by the other lines to the initialization line and the crosstalk generated by the initialization line to the other lines. Therefore, it is necessary to regard the crosstalk problem occurred by the initialization line to the other lines and the crosstalk problem occurred by the other lines to the initialization line as a common object to be considered so as to determine the final crosstalk data. Therefore, in this embodiment, it is also necessary to determine the second far-end crosstalk data of the initialization line to the vectored line. The determination of the second far-end crosstalk data is performed in accordance with the provisions of the G993.5 standard, and then the final crosstalk data is determined according to the first and second far-end crosstalk data to cause the central office device to establish the link based on the final crosstalk data.

In the above scheme, the determining that the historical far-end crosstalk data of the vectored line to the initialization line conforms to the first preset rule includes:
determining that storage time of the historical far-end crosstalk data of the vectored line to the initialization line is less than or equal to a first preset threshold value; and
determining that a descending range of a signal-to-noise ratio allowed by the historical far-end crosstalk data of the vectored line to the initialization line is less than or equal to a second preset threshold value.

In the above scheme, the method of determining the historical far-end crosstalk data includes: acquiring far-end crosstalk factor information of the vector line to the initialization line, and estimating third far-end crosstalk data of the vector line to the initialization line according to the far-end crosstalk factor information; the third far-end crosstalk data being the historical far-end crosstalk data.

In the present embodiment, the acquisition of the far-end crosstalk factor information of the vectored line to the initialization line includes:
sending by the central office device a first signal to the modem through the initialization line; and obtaining a second signal by applying crosstalk on the first signal by the initialization line; and
receiving by the modem the second signal, determining far-end crosstalk factor information of the initialization line according to the second signal, and transmitting the far-end crosstalk factor information to the central office device.

Herein, since there is crosstalk to the initialization line by other lines, the second signal received by the modem is different from the first signal transmitted by the central office device, and the second signal is a signal generated after being applied with crosstalk. Therefore, the modem needs to determine the far-end crosstalk factor information of the initialization line according to the second signal and send the far-end crosstalk factor information to the central office device, so as to lay a foundation for determining the far-end crosstalk data by the central office device.

In the implementation process, in the current link establishing state, when the central office device stores with the historical far-end crosstalk data, that is, the current link establishing is not the first time to establish a link in the cable bundle; the cable bundle is a cable bundle corresponding to the current link establishing, and before the current establishment of the link, the central office device has established the link for the other user request, i.e., the central office device is stored with the far-end crosstalk data of the once determined vectored line to the initialization line, which is referred to as historical far-end crosstalk data. At this time, it is further determined whether the historical far-end crosstalk data conforms to the first preset rule, and if the historical far-end crosstalk data conforms to the first preset rule, the historical far-end crosstalk data is used as the far-end crosstalk data of the vectored line to the initialization line of the current link establishment, and then the link is established based on the historical far-end crosstalk data. In this way, the calculation process of estimating the far-end crosstalk data of the vectored line to the initialization line in the related art can be ignored, which can shorten the link establishing time, and lay the foundation of improvement of the performance of VDS12 technology.

The embodiments of the present disclosure also provide a computer storage medium stored with computer executable instructions for executing the method shown in Fig. 2.

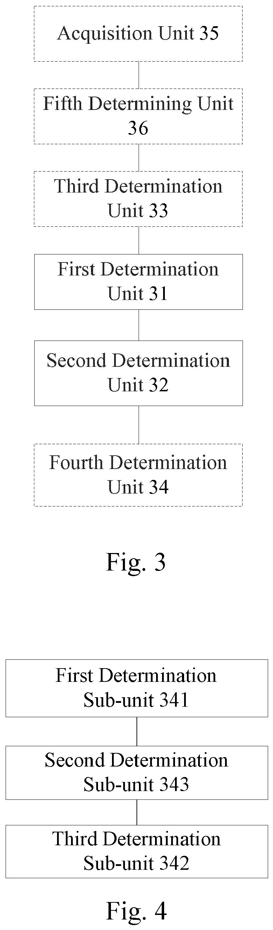

In order to realize the above method, the embodiments of the present disclosure also provide a device for shortening link establishing time. As shown in Fig. 3, the device includes: a first determination unit 31 and a second determination unit 32.

The first determination unit 31 is configured to, when it is determined that historical far-end crosstalk data of a vectored line to an initialization line coincides with a first preset rule, use the historical far-end crosstalk data as first far-end crosstalk data of the vectored line to the initialization line in current link establishment state.

The second determination unit 32 is configured to establish a link based on the first far-end crosstalk data.

The initialization line is a line corresponding to the current link establishment; and the vectored line is a line that causes crosstalk to the initialization line at the time of the current link establishment.

In the above aspect, the device further includes: a third determination unit 33.

The third determination unit 33 is configured to, before determining that the historical crosstalk data of the vectored line to the initialization line coincides with the first preset rule, determine whether the historical far-end crosstalk data is stored in the current link establishment state.

In the above aspect, the device further includes: a fourth determining unit 34.

The fourth determining unit 34 is configured to determine second far-end crosstalk data of the initialization line corresponding to the current link establishment to the vectored line according to a second preset rule.

Correspondingly,
the second determination unit is further configured to establish the link based on the first far-end crosstalk data and the second far-end crosstalk data.

As shown in Fig. 4, in the above aspect, the fourth determining unit 34 includes: a first determination sub-unit 341, a second determination sub-unit 342, and a third determination sub-unit 343.

The first determination sub-unit 341 is configured to determine first sub-far-end crosstalk data of the initialization line corresponding to the current link establishment to the vectored line.

The second determination sub-unit 342 is configured to re-determine second sub-far-end crosstalk data of the initialization line corresponding to the current link establishment to the vectored line.

The third determination sub-unit 343 is configured to use the first sub-far-end crosstalk data or the second sub-far-end crosstalk data as second far-end crosstalk data of the initialization line to the vectored line according to the second preset rule.

The vectored crosstalk is a line in which the far-end crosstalk is eliminated by using a vectoring method.

In the above scheme, the first determination unit 31 is further configured to, when determining that storage time of the historical far-end crosstalk data of the vectored line to the initialization line is equal to or less than a first preset threshold value and determining that a descending range of a signal-to-noise ratio allowed by the historical far-end crosstalk data of the vectored line to the initialization line is less than or equal to a second preset threshold value, use the historical far-end crosstalk data as the first far-end crosstalk data of the vectored line to the initialization line in the current link establishment state.

In the above scheme, the device further includes: an acquisition unit 35, and a fifth determining unit 36.

The acquisition unit 35 is configured to acquire far-end crosstalk factor information of the vectored line to the initialization line.

The fifth determining unit 36 is configured to estimate third far-end crosstalk data of the vectored line to the initialization line based on the far-end crosstalk factor information, the third far-end crosstalk data being the historical far-end crosstalk data.

The embodiments of the present disclosure further provide a central office device, including: any of the above-described devices for shortening link establishing time.

### Second Embodiment

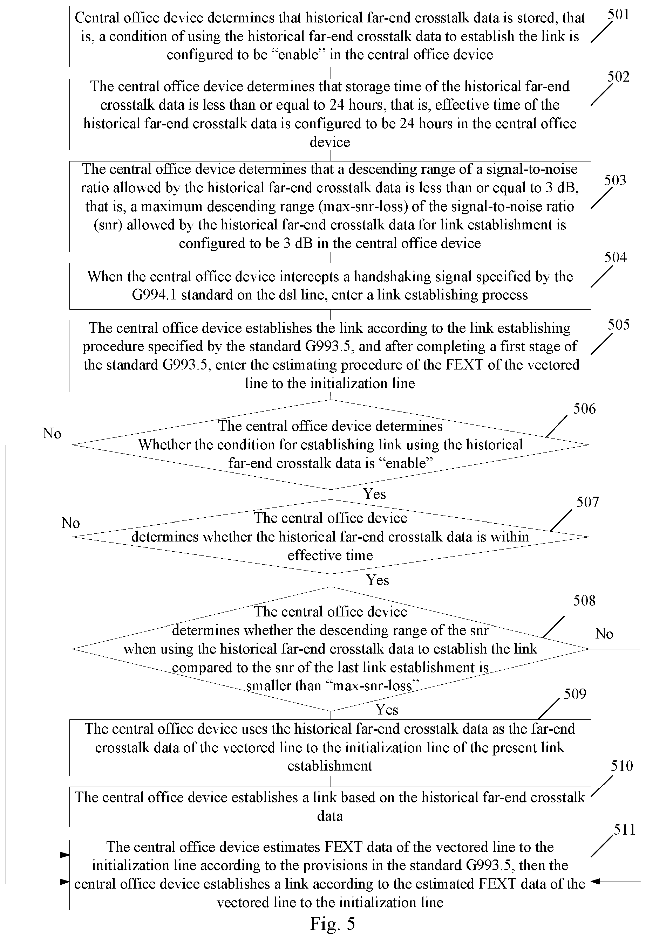

Fig. 5 is a schematic flow chart of a specific implementation of a method for shortening link establishing time according to an embodiment of the present disclosure. As shown in Fig. 5, the method includes the following steps.

In step 501, the central office device determines that historical far-end crosstalk data is stored, that is, in the central office device, a condition of using the historical far-end crosstalk data to establish the link is configured to be "enable".

The historical far-end crosstalk data is determined using the G993.5 standard during the link establishment.

In step 502, the central office device determines that storage time of the historical far-end crosstalk data is less than or equal to 24 hours, that is, effective time of the historical far-end crosstalk data is configured to be 24 hours in the central office device.

In step 503, the central office device determines that a descending range of a signal-to-noise ratio allowed by the historical far-end crosstalk data is less than or equal to 3 dB, that is, the maximum descending range (max-snr-loss) of the signal-to-noise ratio (snr) allowed by link establishment using the historical far-end crosstalk data is configured to be 3 dB in the central office device.

At this time, the central office device has already set a preset condition for using the historical far-end crosstalk data as the far-end crosstalk data of the vectored line to the initialization line of link establishment. After the user requests to establish a link, and when the initialization line of the current link establishment is a dsl line, step 504 is performed.

In step 504, when the central office device intercepts a handshaking signal specified by the G994.1 standard on the dsl line, a link establishing process is entered.

In step 505, the central office device establishes the link according to the link establishing procedure specified by the standard G993.5, and after completing a first stage of the standard G993.5, enters the estimating procedure of the FEXT of the vectored line to the initialization line.

The vectored line is a crosstalk canceling line, that is, a line eliminating the far-end crosstalk by using the vectoring method.

In step 506, the central office device determines whether the condition for establishing link using the historical far-end crosstalk data is "enable"; if so, step 507 is performed; otherwise, step 511 is performed.

In step 507, the central office device determines whether the historical far-end crosstalk data is within effective time; if so, step 508 is performed; otherwise, step 511 is performed.

In step 508, the central office device determines whether the descending range of the snr when using the historical far-end crosstalk data to establish the link compared to the snr of the last link establishment is smaller than "max-snr-loss"; if so, step 509 is performed; otherwise, step 511 is performed.

In step 509, the central office device uses the historical far-end crosstalk data as the far-end crosstalk data of the vectored line to the initialization line of the present link establishment; then, step 510 is performed.

In step 510, the central office device establishes a link based on the historical far-end crosstalk data.

In step 511, the central office device estimates FEXT data of the vectored line to the initialization line according to the provisions in the standard G993.5, then the central office device establishes a link according to the estimated FEXT data of the vectored line to the initialization line.

In the actual practice, all the first determination unit 31, the second determination unit 32, the third determination unit 33, the fourth determination unit 34, the acquisition unit 35, and the fifth determination unit 36 may be run on a computer and may be implemented by a central processing unit (CPU) on a computer, or a microprocessor (MPU), or a digital signal processor (DSP), or a programmable gate array (FPGA).

It will be appreciated by those skilled in the art that the embodiments of the present disclosure may provide methods, systems, or computer program products. Thus, the present disclosure may take the form of a hardware embodiment, a software embodiment, or an embodiment combining software and hardware aspects. Moreover, the present disclosure may take the form of a computer program product implemented on one or more computer usable storage media (including but not limited to magnetic disk storage and optical storage, etc.) containing computer usable program code therein.

The present disclosure is described with reference to the flow charts and/or block diagrams of a method, apparatus (system), and computer program product according to the embodiments of the present disclosure. It is to be understood that each flow and/or block in the flow charts and/or block diagrams, as well as combinations of flows and/or blocks in the flow charts and/or block diagrams, may be implemented by the computer program instructions. These computer program instructions may be provided to a processor of a general purpose computer, a special purpose computer, an embedded processing device, or other programmable data processing device to produce a machine such that instructions executed by the processor of the computer or other programmable data processing device generate means for implementing functions specified in one flow or a plurality of flows in the flow charts and/or one block or a plurality of blocks in the block diagrams.

The computer program instructions may also be stored in a computer readable memory capable of directing the computer or other programmable data processing device to operate in a particular manner, such that the instructions stored in the computer readable memory produce a manufactured product including the instruction means which implements the functions specified in one flow or a plurality of flows in the flow charts and/or one block or a plurality of blocks in the block diagrams.

These computer program instructions may also be loaded onto the computer or other programmable data processing device such that a series of operational steps are performed on the computer or other programmable device to produce computer-implemented processing, thereby the instructions executed on the computer or other programmable device provide the steps for implementing the functions specified in one flow or a plurality of flows in the flow charts and/or one block or a plurality of blocks in the block diagrams.

The foregoing is merely implementation of the embodiments of the present disclosure. It should be noted that modifications and adaptations may be made by those skilled in the art without departing from the principles of the embodiments of the present disclosure. Such modifications and adaptations should be considered as the protection scope of the embodiments of the present disclosure.

### Industrial Applicability

In the embodiments of the present disclosure, when the historical far-end crosstalk data conforms to the first preset condition, the historical far-end crosstalk data is directly used as the first far-end crosstalk data of the vectored line to the initialization line in the current link establishing state. In this way, during adopting the G993.5 standard, the estimation process of the first far-end crosstalk data of the vectored line to the initialization line can be simplified, and thus the link establishing time is shortened. Therefore, by adopting the embodiments of the present disclosure, the influence of FEXT to the VDSL2 technology can be eliminated, and at the same time, the link establishing time of establishing link for the customer premise equipment can be reduced, and the user experience is improved.

## Claims

1. A method for shortening link establishing time, comprising:
when determining that historical far-end crosstalk data of a vectored line to an initialization line conforms to a first preset rule, using the historical far-end crosstalk data as first far-end crosstalk data of the vectored line to the initialization line in a current link establishing state; and
establishing a link according to the first far-end crosstalk data;
wherein the initialization line is a line corresponding to the current link establishing; and the vectored line is a line that generates crosstalk to the initialization line during the current line establishing.

2. The method of claim 1, wherein before determining that the historical far-end crosstalk data of the vectored line to the initialization line conforms to the first preset rule, the method further comprises:
determining whether the historical far-end crosstalk data is stored in the current link establishing state.

3. The method of claim 1, wherein before determining that the historical far-end crosstalk data of the vectored line to the initialization line conforms to the first preset rule, the method further comprises:
determining second far-end crosstalk data of the initialization line corresponding to the current link establishing to the vectored line according to a second preset rule; and
correspondingly, the establishing the link according to the first far-end crosstalk data comprises:
establishing a link based on the first far-end crosstalk data and the second remote crosstalk data.

4. The method of claim 3, wherein the determining the second far-end crosstalk data of the initialization line corresponding to the current link establishing to the vectored line according to the second preset rule comprises:
determining first sub-far-end crosstalk data of the initialization line corresponding to the current link establishing to the vectored line;
re-determining second sub-far-end crosstalk data of the initialization line corresponding to the current link establishing to the vectored line; and
using the first sub-far-end crosstalk data or the second sub-far-end crosstalk data as the second far-end crosstalk data of the initialization line to the vectored line according to the second preset rule;
wherein the vectored line is a line in which far-end crosstalk is eliminated by using a vectoring method.

5. The method of claim 1, wherein the determining that the historical far-end crosstalk data of the vectored line to the initialization line conforms to the first preset rule comprises:
determining that storage time of the historical far-end crosstalk data of the vectored line to the initialization line is less than or equal to a first preset threshold value; and
determining that a descending range of a signal-to-noise ratio allowed by the historical far-end crosstalk data of the vectored line to the initialization line is less than or equal to a second preset threshold value.

6. The method of any one of claims 1 to 5, wherein the method of determining the historical far-end crosstalk data comprises:
acquiring far-end crosstalk factor information of the vectored line to the initialization line, and estimating third far-end crosstalk data of the vectored line to the initialization line according to the far-end crosstalk factor information; the third far-end crosstalk data being the historical far-end crosstalk data.

7. An apparatus for shortening link establishing time, comprising:
a first determination unit configured to, when determining that historical far-end crosstalk data of a vectored line to an initialization line conforms to a first preset rule, use the historical far-end crosstalk data as first far-end crosstalk data of the vectored line to the initialization line in a current link establishing state; and
a second determination unit configured to establish a link according to the first far-end crosstalk data;
wherein the initialization line is a line corresponding to the current link establishing; and the vectored line is a line that generates crosstalk to the initialization line during the current line establishing.

8. The apparatus of claim 7, further comprising:
a third determination unit configured to, before determining that the historical far-end crosstalk data of the vectored line to the initialization line conforms to the first preset rule, determine whether the historical far-end crosstalk data is stored in the current link establishing state.

9. The apparatus of claim 7, further comprising:
a fourth determination unit configured to determine second far-end crosstalk data of the initialization line corresponding to the current link establishing to the vectored line according to a second preset rule,
correspondingly,
the second determination unit is further configured to establish a link based on the first far-end crosstalk data and the second far-end crosstalk data.

10. The apparatus of claim 9, wherein the fourth determination unit comprises:
a first determination subunit configured to determine first sub-far-end crosstalk data of the initialization line corresponding to the current link establishing to the vectored line;
a second determination subunit configured to re-determine second sub-far-end crosstalk data of the initialization line corresponding to the current link establishing to the vectored line; and
a third determination subunit configured to use the first sub-far-end crosstalk data or the second sub-far-end crosstalk data as the second far-end crosstalk data of the initialization line to the vectored line according to the second preset rule;
wherein the vectored line is a line in which far-end crosstalk is eliminated by using a vectoring method.

11. The apparatus of claim 7, wherein the first determining unit is further configured to, when determining that storage time of the historical far-end crosstalk data of the vectored line to the initialization line is less than or equal to a first preset threshold value; and determining that a descending range of a signal-to-noise ratio allowed by the historical far-end crosstalk data of the vectored line to the initialization line is less than or equal to a second preset threshold value, use the historical far-end crosstalk data as the first far-end crosstalk data of the vectored line to the initialization line in the current link establishing state.

12. The apparatus of any one of claims 7 to 11, further comprising:
an acquisition unit configured to acquire far-end crosstalk factor information of the vectored line to the initialization line; and
a fifth determination unit configured to estimate third far-end crosstalk data of the vectored line to the initialization line according to the far-end crosstalk factor information; the third far-end crosstalk data being the historical far-end crosstalk data.

13. A central office device, comprising the apparatus for shortening link establishing time of any one of claims 7 to 12.

14. A computer storage medium stored with computer executable instructions for executing the method of any of claims 1-6.
